# FASCICULE DE BREVET EUROPEEN

(11) **EP 0 594 700 B1**
(45) Date de publication et mention de la délivrance du brevet: **02.11.1995**
(21) Numéro de dépôt: 92915087.8
(22) Date de dépôt: 01.07.1992
(51) Int. Cl.: D04H 18/00, D04H 1/46, D04H 3/10, D04H 13/00, B32B 1/00

(54) **PROCEDE ET DISPOSITIF POUR LA REALISATION DE NAPPES COMPOSITES ET COMPOSITES OBTENUS**
Verfahren und Vorrichtung zum Herstellen einer Verbundbahn, sowie damit hergestellte Verbundbahn.
METHOD AND DEVICE FOR PRODUCING COMPOSITE LAPS AND COMPOSITES THEREBY OBTAINED

(30) Priorité: 03.07.1991 FR 9108279
(43) Date de publication de la demande: 04.05.1994
(73) Titulaire: LE ROY, Guy, F-91140 Villebon-sur-Yvette (FR)
(72) Inventeur: LE ROY, Guy, F-91140 Villebon-sur-Yvette (FR)
(74) Mandataire: Pontet, Bernard
(86) Numéro de dépôt international: FR9200612
(87) Numéro de publication internationale: WO9301342

(56) Documents cités:
- EP-A- 0 013 902
- EP-A- 0 086 996
- EP-A- 0 088 213
- EP-A- 0 232 729
- EP-A- 0 296 996
- EP-A- 0 410 733
- DE-A- 2 348 600
- FR-A- 2 022 947
- US-A- 3 881 972
- US-A- 3 936 555
- US-A- 4 194 280

## Description

La présente invention concerne un procédé et un dispositif pour réaliser une nappe composite.

Selon le EP-A-0086996, on cherche à fabriquer un produit composite ayant une certaine tenue mécanique tout en étant encore formable. Pour cela on place entre deux nappes une masse pateuse imbibée d'eau, et on procède à un aiguilletage des deux nappes à travers la masse pateuse. Les deux nappes conservent en permanence entre elles un écartement maintenu sans précision par la masse pateuse, dont l'épaisseur est bien sûr très incertaine. Cet écartement varie au cours de l'aiguilletage. La nappe supérieure qui subit l'aiguilletage est considérablement déformée par le passage des aiguilles car la masse pateuse ne lui procure qu'un soutien insuffisant.

L'épaisseur du produit obtenu est incertaine. L'aiguilletage à travers le constituant intercalaire fait beaucoup travailler les aiguilles et peut s'avérer impossible avec certains types de constituant intercalaire, qui ne permettent pas ou seraient endommagés par le passage des aiguilles.

Le DE 2356511 décrit un procédé pour assembler par des ponts de fibres aiguilletés, deux nappes élémentaires écartées l'une de l'autre destinées à être séparées par refendage des ponts de fibres pour donner deux nappes de velours identiques.

On connaît encore d'après le DE-A-2 348 600 un procédé pour fabriquer notamment des couvertures chauffantes, dans lequel un fil chauffant est introduit après coup entre deux nappes élémentaires assemblées.

Ce procédé consomme, en plus du temps de l'aiguilletage, le temps d'introduction du fil. Une telle introduction, d'ailleurs non décrite, apparaît malaisée.

Le but de l'invention est de permettre l'assemblage simultané et en continu de composants très divers en vue de l'obtention d'une nappe composite dont les propriétés peuvent être, elles-mêmes, très diverses en fonction des applications.

Selon un premier aspect de l'invention, le procédé pour réaliser une nappe composite, dans lequel on relie l'une à l'autre deux nappes élémentaires selon des lignes de liaison longitudinales en les maintenant, là où s'effectue le processus de liaison, écartées l'une de l'autre par action mécanique entre les lignes de liaison en cours de formation, est caractérisé en ce qu'à mesure qu'on relie les deux nappes, on guide entre elles un constituant intercalaire pour l'introduire dans les espaces longitudinaux définis entre les lignes de liaison longitudinales par ladite action mécanique.

En maintenant les nappes mécaniquement écartées l'une de l'autre, on réalise un produit parfaitement calibré. Les aiguilles n'ont qu'à traverser les deux nappes, sans s'user ou se rompre à travers le constituant intercalaire et sans endommager celui-ci. On introduit à mesure le constituant intercalaire dans les espaces longitudinaux résultant de l'action mécanique entre les lignes de liaison longitudinales déjà réalisées. De cette façon, le constituant intercalaire trouve aisément sa place, il se positionne correctement et on ne perd pas de temps pour l'introduire ultérieurement.

L'invention permet donc au total l'obtention de produits bien plus variés, beaucoup mieux calibrés, et avec une moindre usure du matériel.

Dans une version particulière, dans laquelle on amène les nappes élémentaires de part et d'autre d'une table à lamelles longitudinales, et l'on relie les nappes élémentaires de façon que les lignes de liaison longitudinales s'étendent entre les lamelles, il est prévu d'introduire le constituant intercalaire dans des conduits longitudinaux ménagés dans les lamelles, de façon que le constituant intercalaire, lorsqu'il sort des lamelles, se place entre les nappes élémentaires et entre les lignes de liaison longitudinales. On peut injecter dans les conduits des lamelles au moins un fluide ou une poudre qui fait prise avec l'une au moins des nappes élémentaires à la sortie des conduits. Cet élément fluide peut être une résine thermodurcissable ou thermoformable, un plâtre, un ciment, un élastomère ou une mousse. On peut aussi choisir comme élément intercalaire un élément solide parmi les câbles, les conducteurs électriques, les tubes, les ensembles de filaments, les fils de toute nature.

On peut relier les deux nappes élémentaires par aiguilletage, couture ou soudure, par exemple, soudure laser ou ultrason.

Les deux nappes élémentaires peuvent être des nappes fibreuses, (fibres ou filaments), tissées, ou préconsolidées mécaniquement, ou thermiquement, ou chimiquement, ou tout autre procédé de consolidation. Les nappes élémentaires peuvent être constituées de la même matière ou de matières d'origine et structure différentes ainsi que de poids et densité différentes. Les nappes élémentaires peuvent être constituées de fibres synthétiques, artificielles, animales, végétales, inorganiques, en mélange ou pures, y compris fibres de carbone, fibres métalliques.

Chaque nappe élémentaire peut être associée à un tissu ou- tout support améliorant le transport dans le dispositif, ou utile dans la réalisation de la nappe composite finale.

Le constituant intercalaire introduit sous forme de fluide sera injecté pour permettre sa transformation définitive après d'éventuels traitements supplémentaires, hors dispositif, afin d'obtenir un constituant intercalaire à propriétés spécifiques déterminées telles qu'isolantes, absorbantes, à consolidation mécanique, résistantes thermiquement ou chimiquement et toute propriété obtenue d'un composant à l'origine injectable.

Complémentairement ou alternativement, le constituant intercalaire peut comporter des fils ou filaments d'origine variée tels que fils métalliques ou plastiques, fils ou filaments en carbone, synthétique, artificiel, d'origine animale et végétale ou multicomposants. Ces fils ou filaments seront de section, jauge et poids variables en fonction du besoin. Par exemple, le constituant intercalaire peut être constitué de filaments synthétiques à bas point de fusion donc fusibles, lesquels permettraient durant un traitement thermique une dispersion dans leur environnement permettant une consolidation des composants les environnant.

Ce constituant intercalaire peut, aussi, être par exemple une gaine creuse ou pleine, un câble électrique isolé, un profil en matériau spécial (poreux, absorbant, etc) assurant une spécification particulière à la nappe composite obtenue.

Selon un deuxième aspect de l'invention, le dispositif pour fabriquer une nappe composite, comprenant des moyens pour guider deux nappes élémentaires parallèlement l'une à l'autre avec des moyens mécaniques pour définir un écartement entre elles et des moyens pour relier les deux nappes selon des lignes de liaison longitudinales au voisinage dedits moyens mécaniques, est caractérisé en ce qu'il comprend, en outre, des moyens pour guider un constituant intercalaire entre les nappes à mesure de leur avance parallèlement l'une à l'autre pour introduire ledit constituant dans les espaces longitudinaux définis par les moyens mécaniques entre les lignes de liaison longitudinales.

D'autres particularités et avantages de l'invention ressortiront encore de la description ci-après, relative à des exemples non limitatifs.

Aux dessins annexés :
- la figure 1 est une vue en coupe longitudinale verticale d'un dispositif selon l'invention ;
- la figure 2 est une vue partielle en coupe selon la ligne II-II de la figure 1, montrant divers exemples de réalisations ;
- la figure 3 est une vue partielle selon le plan III-III de la figure 2 ;
- la figure 4 est une vue d'une aiguille à feutrer, avec détail de son extrémité à échelle agrandie ;
- la figure 4a est une vue de deux variantes de coupe transversale de l'aiguille ;
- La figure 5 est analogue à la figure 4, mais relative à une autre aiguille, et avec, en outre, une vue en bout;
- Les figures 6 et 7 sont des vues analogues à la figure 1, mais relatives à deux autres modes de réalisation de dispositif; et,
- Les figures 8 à 13 sont des coupes transversales partielles de nappes composites selon l'invention, selon le plan VIII-VIII de la figure 1.

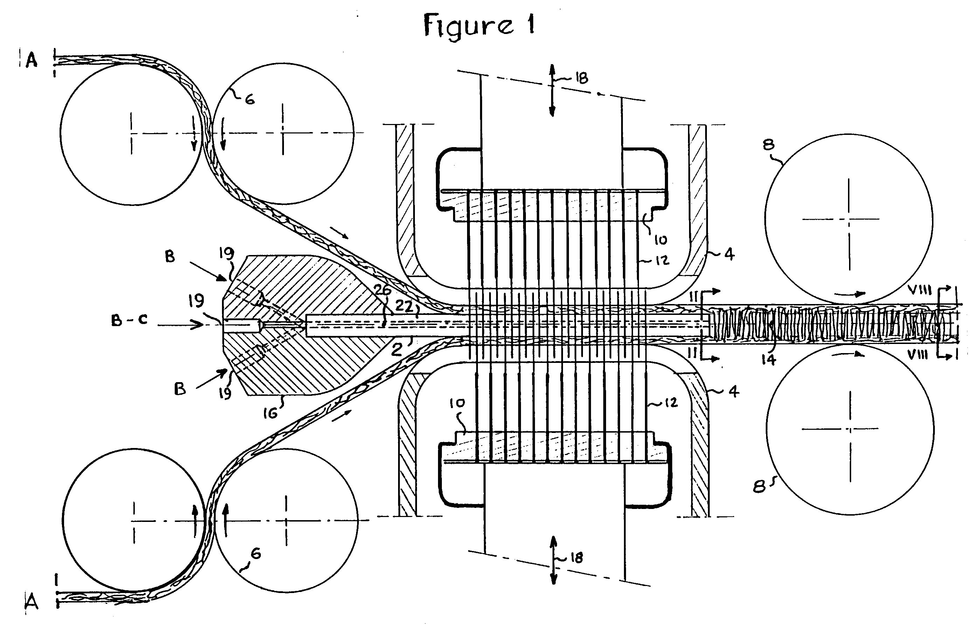

Le dispositif représenté à la figure 1 utilise la technologie de l'aiguilletage connue en soi pour la fabrication des produits non-tissés. Le principe de l'aiguilletage de nappes de fibres permet une liaison interfibres et donc une consolidation de cette nappe en utilisant des aiguilles (12) lesquelles entrainent les fibres dans un sens vertical ou oblique par rapport à la surface horizontale de la nappe de fibres dont l'orientation peut être préorientée ou au hasard. Cette action de va et vient vertical ou oblique, à grande vitesse, des aiguilles permet un entrelaçage des fibres et une consolidation de la nappe ainsi aiguilletée.

Les aiguilles (12) figure 1, sont montées sur des planches (10) qui maintiennent leur positionnement selon une implantation choisie. Les planches (10), actionnées par excentriques (non représentés), sont animées d'un mouvement de va et vient (18).

Selon l'invention, comme le montre la figure 1, on amène deux nappes élémentaires (A) dans le dispositif de telle façon qu'elles se positionnent horizontalement et parallèlement, séparées par une table à lamelles longitudinales (2) qui détermine un espace entre ces deux nappes (A).

La table à lamelles (2) peut avoir une épaisseur qui décroit de l'entrée vers la sortie du dispositif pour favoriser le glissement des nappes élémentaires vers la sortie.

Les nappes élémentaires (A) sont maintenues chacune en position par deux contre plaques lamellées (4) appelées "débourreurs", réglables pour ajuster l'écartement par rapport à la table à lamelles (2). les nappes (A) avancent à la même vitesse dans le dispositif, par rotation des cylindres d'alimentation (6) et des cylindres délivreurs (8).

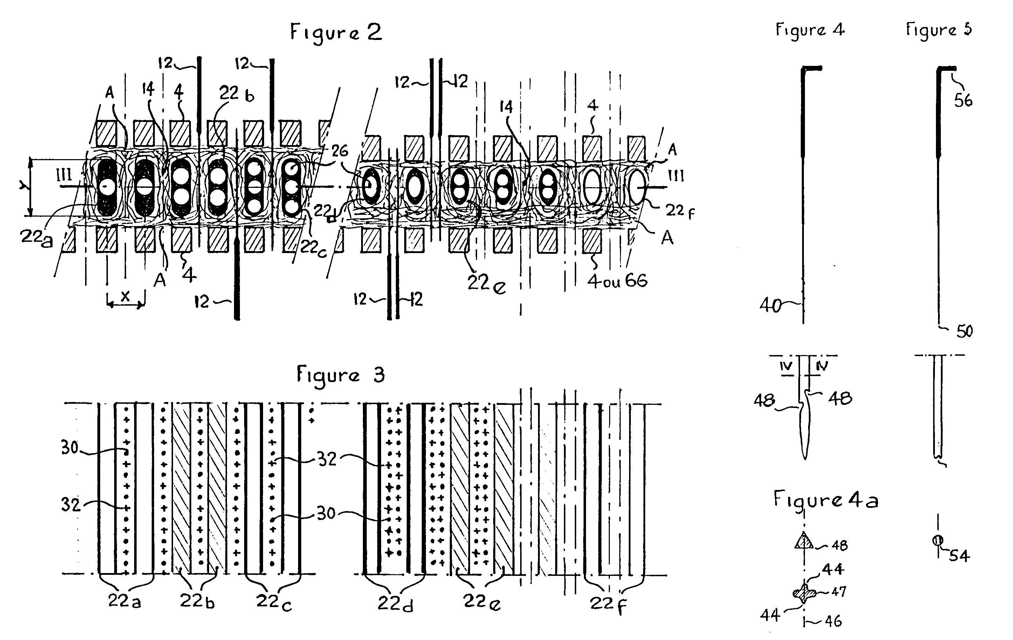

La liaison mécanique des deux nappes s'effectue par le mouvement de va et vient (18), réciproque et simultané, des planches à aiguilles (10) de telle sorte que les aiguilles (12) opposées pénètrent en même temps dans les nappes élémentaires à lier. Les aiguilles sont des aiguilles à feutrer (12) avec barbes, aussi représentées aux figures 4 et 4a, ou d'aiguilles velours comme représentées à la figure 5.

Pour permettre la pénétration simultanée sans que les aiguilles s'entrechoquent, les aiguilles de chaque planche sont décalées par rapport à celles de l'autre planche.

Ces aiguilles sont implantées de telle sorte qu'elles pénètrent les nappes élémentaires (A) dans les espaces longitudinaux entre les lamelles longitudinales (22) de la table (2) en produisant des lignes de liaison longitudinales (14) entre les deux nappes élémentaires (A). Les fibres des lignes de liaison longitudinales ainsi créés proviennent de chaque nappe élémentaire (A) pour s'implanter dans la nappe opposée.

L'implantation décalée des aiguilles d'une planche par rapport à celles de l'autre planche provoque, dans les lignes de liaison longitudinales, une alternance de fibres provenant de l'une et l'autre des nappes (A).

Les planches à aiguilles (10) sont réglables en profondeur de pénétration afin d'assurer la précision de l'implantation des fibres des lignes de liaison longitudinales dans la nappe opposée. Les spécifications des lamelles (22), leur espacement sont définies pour chaque type de nappe composite.

L'enclume porte-lamelles (16) est conçue : pour être interchangeable selon le type de lamelles (22) utilisé, pour prérégler l'espacement entre lamelles, pour permettre leur remplacement.

Selon l'espace qui sera déterminé entre les lamelles (22), il est prévu d'utiliser une ou plusieurs rangées d'aiguilles à feutrer (12) dans chacun des espaces entre lamelles (22) (voir les figures 2 et 3, partie droite, ou les lamelles sont désignées par (22d)à(22f)). Le nombre de lamelles (22) et d'espaces entre lamelles est déterminé en fonction de la largeur de la nappe composite désirée.

Cette largeur de travail n'est limitée que par les possibilités techniques de fabrication du dispositif. Les largeurs jusqu'à quatre mètres peuvent être aisément envisagées.

L'entrainement des nappes élémentaires (A) peut être réalisé par une avance continue ou discontinue des cylindres (6) et (8), comme l'avance utilisée pour les cylindres délivreurs des aiguilleteuses.

L'avance discontinue des nappes élémentaires (A) a l'avantage de stopper l'avancement des nappes lorsque les aiguilles à feutrer (12) sont en pénétration dans celles-ci. L'avancement des nappes (A) se fait lorsque les aiguilles à feutrer sont en dehors de celles-ci.

Le pas d'avance représente l'avance des nappes pour une révolution des excentriques de mouvement de va et vient (18). Le pas d'avance est synchronisé avec le mouvement d'excentrique animant les planches à aiguilles (10) dans leur mouvement de va et vient (18). Ce pas est un paramètre à définir en fonction : de la densité désirée des fibres constituant les lignes de liaison longitudinales, du volume du constituant intercalaire fluide à injecter, de la vitesse de frappe des planches à aiguilles (10). En aiguilletage, la vitesse des cylindres délivreurs est généralement située entre 0,50 et 10 m/mn.
- La figure 2 montre les lignes de liaison longitudinales (14) constituées de fibres, entre les lamelles (22), désignées par (22a) à (22f) pour particulariser de nombreux exemples différents de lamelles (22).

Les débourreurs (4) maintiennent les nappes élémentaires (A) lors du retrait des aiguilles à feutrer (12), dans leur mouvement de va et vient (18).

La côte X est le pas défini entre les lamelles (22). Cette côte peut être à espace régulier ou irrégulier. La côte X peut raisonnablement commencer à partir de 3 mm jusqu'à une côte à déterminer pour les besoins de la nappe composite.

A noter que cette côte X définit également le pas d'implantation des rangées d'aiguilles (12) sur la planche (10).

La cote Y correspond à la hauteur des lamelles (22). La côte maximum Y dépend : de la longueur des aiguilles à feutrer (12) disponibles lesquelles ont actuellement une longueur maximum de 102 mm, et de la course d'excentrique utilisé pour le mouvement de va et vient (18) des planches à aiguilles (10), ainsi que de l'épaisseur des nappes élémentaires (A) alimentées dans le dispositif.

Selon l'invention, Les lamelles (22) sont conçues avec au moins un conduit longitudinal (26) permettant le passage d'un constituant intercalaire fluide (B) et/ou solide (C) (figure 1).

Ces conduits, à leur extrémité amont relativement au sens de défilement des nappes élémentaires (A)), sont raccordés à des orifices d'introduction (19) ménagés dans l'enclume porte-lamelles (16), et à leur extrémité aval, située en aval des aiguilles (12), débouchent dans l'espace entre les deux nappes élémentaires (A) et entre les lignes de liaison longitudinales (14).

Les orifices d'introduction (19) permettent d'introduire, en amont de la table à lamelles (2), un ou plusieurs constituants intercalaires dans les conduits (26) pour que ces constituants s'insèrent dans les nappes élémentaires (A) en aval de la table à lamelles (2).

Dans d'autres applications, il y a plusieurs conduits (26) dans chaque lamelle (22) (lamelles 22b,c et a), reliés à des orifices (19) différents, ce qui permet d'introduire, au moins, deux constituants intercalaires différents dans chaque conduit d'une lamelle (22) débouchant entre deux rangées adjacentes de lignes de liaison longitudinales (14). Les deux constituants intercalaires peuvent être des produits destinés à faire prise en se mélangeant en aval de la table à lamelles (22).

Les formes des sections de lamelles (22) et de leur(s) conduit(s) (26) sont définies et conçues en fonction de la nappe composite à fabriquer. Cette figure (2) montre différentes sections de lamelles (non limitées à l'exemple) prévues pour différentes utilisations.
- La figure 3 est une vue partielle selon le plan III-III de la figure 2.

Elle présente les points d'impact des aiguilles (12) situés entre les lamelles (22), sur les nappes élémentaires (A) pour réaliser les lignes de liaison longitudinales (14) entre les nappes (A).

Les impacts (30) proviennent de la planche à aiguilles supérieure (10) de la figure 1, les impacts (32) proviennent de la planche à aiguilles inférieure (10) de la même figure.

Dans l'exemple représenté, à la partie gauche des figures 2 et 3, il y a une seule rangée d'impacts d'aiguilles entre deux lamelles (22), et dans la partie droite deux rangées d'impacts entre les lamelles (22). Il est possible de prévoir d'avantages de rangées d'aiguilles entre lamelles voisines, dans les cas ou l'espace, entre deux lamelles (22) voisines le permet. L'orientation des rangées d'impacts est dans le sens de défilement des nappes élémentaires (A).

La lamelle (22a) comporte un large conduit (26) pour l'introduction de fils ou filaments intercalaires ou d'un constituant intercalaire fluide.

Dans la lamelle (22b), deux conduits permettent l'introduction de deux constituants intercalaires (B) différents ou identiques.

La lamelle (22c) comporte trois conduits permettant l'introduction d'un constituant intercalaire solide (C) et deux constituants intercalaires fluides (B), ou trois composants intercalaires fluides (B).

Les formes des lamelles seront déterminées en fonction des composants intercalaires à introduire, ainsi que de la structure, l'épaisseur, et les qualités intrinsèques de la nappe composite à produire.
- La figure 4 représente une aiguille à feutrer comme celles employées en aiguilletage traditionel. L'aiguille qui sera utilisée dans le dispositif peut être de fabrication standard, ou, pour des réalisations bien spécifiques, est conçue et adaptée pour la nappe composite à réaliser à partir de la composition des nappes élémentaires (A).

La zone de travail (40) est équipée de barbes (48) qui entrainent les fibres des nappes élémentaires (A) entre les lamelles (22), dans les nappes opposées.

Ces barbes sont disposées sur les arêtes de l'aiguille selon la section triangulaire agrandie IV-IV de la figure 4a. Cette section peut être cruciforme, ronde ou autre. Les barbes sont disposées sur les arêtes (44), tournées vers l'amont et vers l'aval, par rapport au sens de défilement (46) des nappes élémentaires, permettant ainsi de protéger les flancs des lamelles (22) gràce à des arêtes sans barbes (47). Dans le cas de section ronde ou ovale (non représentée), les barbes sont disposées, si nécéssaire, de la même manière et dans le même but. Ces aiguilles peuvent. en outre, être de longueur, de barbes et jauge adaptées aux besoins.

Les barbes sont disposées sur les arêtes à des intervalles adaptés aux besoins de l'aiguilletage des nappes élémentaires. Elles peuvent être disposées sur un même niveau ou peuvent être décalées le long des arêtes (44).
- La figure 5 représente une aiguille (12) différente comme utilisée en aiguilletage traditionel pour le velours. La zone de travail (50) est en bout d'aiguille. Celle-ci opère dans les mêmes conditions que l'aiguille de la figure 4, et sera choisie en fonction de la nappe composite à réaliser.

L'embout agrandi de l'aiguille présente une gorge (52) d'entrainement des fibres. L'axe (54) de cette gorge est positionnable par rapport au talon de l'aiguille (56) et en fonction des besoins.

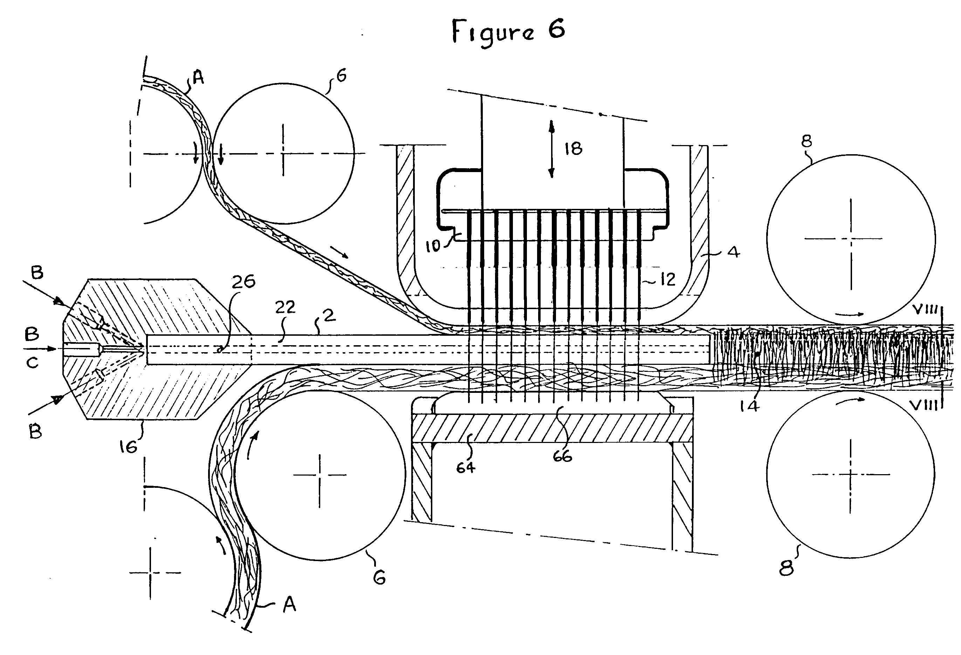

- La figure 6 est une vue analogue à la figure 1 représentant une variante du dispositif de la figure 1.

Ce dispositif opère avec une seule planche à aiguilles (10) pour implanter les fibres de la nappe élémentaire supérieure dans la nappe élémentaire inférieure. La table à lamelles (2), a ici, les mêmes fonctions que celle de la figure 1. Une contre-table (64) équipée de lamelles (66), lesquelles ont le même pas X que les lamelles de la table (2) de façon à permettre le passage des aiguilles (12) dans ces mêmes intervalles entre lamelles, supporte la nappe élémentaire inférieure (A). La contre-table (64) est réglable en hauteur pour permettre le passage de nappes d'épaisseur différente.

Dans ce procédé, les fibres des lignes de liaison longitudinales (14) proviennent uniquement de la nappe élémentaire supérieure.

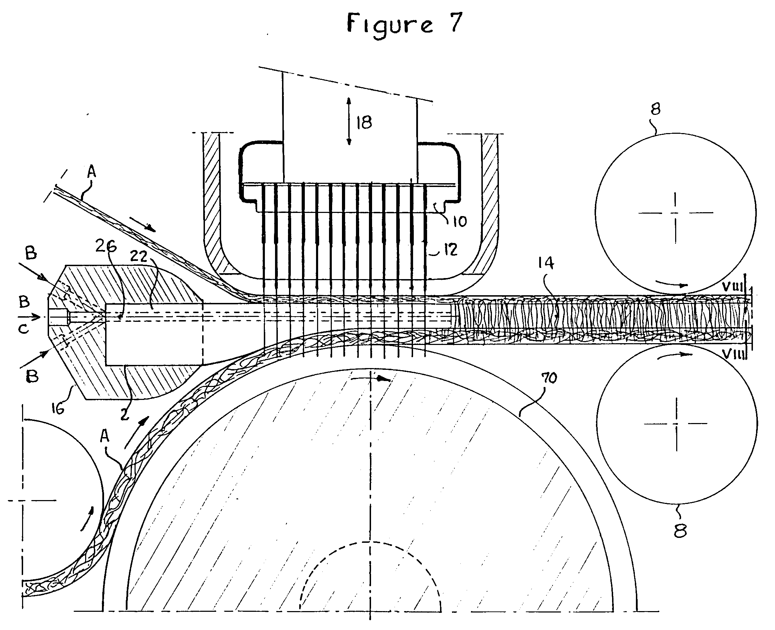

Cette solution permet l'assemblage de nappes élémentaires trés différentes, la nappe inférieure ayant une composition qui ne permet pas l'utilisation du dispositif selon la figure 1.
- L'exemple de la figure 7 ne sera décrit qu'en ce qui concerne ses différences par rapport à celui de la figure 6. La contre-table (64) est remplacée par une contre-table rotative constituée d'un cylindre lamellé (70).

Les lamelles périphériques du cylindre ont le même pas X que la table à lamelles (2), de façon à permettre le passage des aiguilles dans les espaces entre lamelles.

Cette solution permet l'entrainement plus aisé de nappes élémentaires inférieures (A), lesquelles seraient, par exemple, de tenue plus fragile, telles que les nappes de fibres céramiques.

Les figures suivantes représentent des coupes transversales selon le plan VIII-VIII des figures (1) (7) et (8), de nappes composites élaborées selon le procédé décrit.

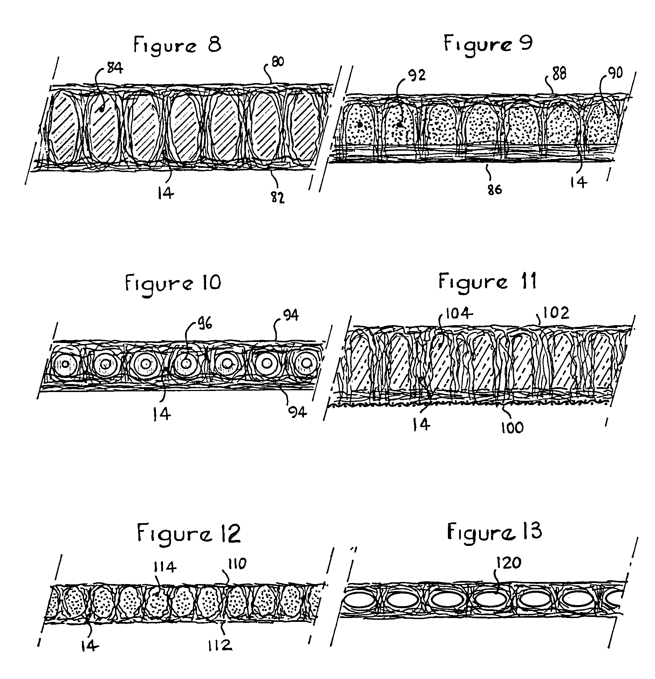

- La figure 8 représente une nappe composite constituée, par exemple, d'une première nappe élémentaire à base de fibres aramides nappées et préconsolidées (80). L'autre nappe élémentaire peut alors être à base de fibres de carbone nappées et préconsolidées (82).

Le constituant intercalaire (84) de remplissage, entre les lignes de liaison longitudinales (14) et les nappes (80) et (82), est par exemple une résine thermoplastique permettant la consolidation mécanique de l'ensemble de la nappe composite, et si nécéssaire, permettant son thermoformage. L'une des deux nappes élémentaires peut être, aussi, une nappe de fibres de verre. La nappe composite de la figure 8 est réalisable avec un dispositif selon la figure 1, par exemple.
- La figure 9 représente une nappe composite constituée par exemple, d'une première nappe élémentaire type revêtement mural ou tapis aiguilleté (86) ayant un fini de surface sur sa face extérieure.

L'autre nappe élémentaire est constituée de fibres polypropylène nappées et préconsolidées (88). Les lignes de liaison longitudinales sont constituées de fibres prélevées de cette nappe (88) pour être implantées dans le revétement mural ou tapis (86). Le constituant intercalaire (90) est une mousse d'isolation, ou un platre, ou une mousse élastomère, lesquels sont injectés fluide avant traitement final. Ces nappes composites, ainsi constituées, sont destinées à des panneaux isolants (avec mousse ou platre) ou tapis de sol (avec élastomère) pour un travail répété à la compression comme tapis de sport.

Il est possible d'adjoindre, au constituant (90), un autre constituant intercalaire (92), par exemple, une résistance électrique de chauffage, dans le cas de panneaux pour cloisons isolantes. La fabrication serait alors assurée sur un dispositif selon la figure 6 ou 7, avec la planche à aiguilles (10) du coté de la nappe (88).
- La figure 10 représente une nappe composite constituée de deux nappes élémentaires (94) conposées de fibres mélangées dont l'une est une fibre thermofusible à basse température. Cette fibre thermofusible est associée dans une proportion de 10 à 30% à des fibres qui sont le support des nappes élémentaires, donc la base de la nappe composite. Ces nappes (94) sont préconsolidées puis assemblées dans le dispositif par les lignes de liaison longitudinales.

Le constituant intercalaire (96) serait un cable électique gainé, alimenté par l'enclume (16) de la figure 1. Dans ce cas, les lamelles guident les cables (96). Ceux-ci peuvent aussi faire office de lamelles s'ils sont mis en position par l'enclume (16).

Aprés traitement thermique, l'ensemble constitue un panneau rigide. La fabrication est assurée sur un dispositif selon la figure 1. Cet exemple permet de démontrer la possibilité d'introduire des constituants intercalaires solides pour leur intégration dans une nappe composite.

Ce constituant solide remplacerait, dans certains cas, les lamelles dans leur fonction, lorque cela est rendu possible par sa forme compatible pour son utilisation dans le dispositif selon les figures 1, 6, et 7.
- La figure 11 représente une nappe composite constituée d'une nappe élémentaire (100) ayant, sur son coté opposé à l'autre nappe, un fini de surface sous la forme d'un tissu contrecollé préalablement sur une nappe non-tissée préconsolidée.

L'autre nappe élémentaire (102) est un non-tissé préconsolidé dont les aiguilles (12) de la planche (10) prélévent des fibres de la nappe (102) pour les implanter dans la nappe élémentaire (100) inférieure, et constituer ainsi les lignes de liaison longitudinales. Le constituant élémentaire (104) remplit les espaces disponibles à la sortie des lamelles, entre les lignes de liaison longitudinales et les nappes (100) et (102), pour constituer une nappe composite de type panneau mural ou, si le tissé est en fibres de verre, un panneau pour la construction navale et utilisation similaire. Le dispositif utilisé dans ce cas est selon les figures 6 ou 7.
- La figure 12 représente une nappe composite constituée d'une nappe élémentaire (110) composée d'un non-tissé préconsolidé de polyester de 80 à 150 g/m2. L'autre nappe élémentaire (112) est composée d'un non-tissé préconsolidé en viscose de 150 à 230 g/m2.

Ces deux nappes sont reliées par des lignes de liaison longitudinales constituées de leurs fibres respectives. Le constituant intercalaire (114) est un multi-filament d'un polymère superabsorbant au contact d'un liquide. Cette nappe composite est destinée aux applications médicales ou hygièniques. Le composite est fabriqué selon le dispositif de la figure 1. Sur ce principe, d'autres nappes composites peuvent être élaborées pour des applications industrielles nécéssitant l'absorption d'un produit liquide.
- La figure 13 représente une nappe composite géotextile de drainage ou d'application similaire. Ce peut être un panneau filtrant pour liquide, l'évacuation du liquide est faite par le tube capilaire (120) représenté ici ovale mais pouvant avoir n'importe quelle section compatible avec le dispositif. Les nappes élémentaires constituant la nappe composite sont déterminées en fonction des applications choisies.

## Revendications

1. Procédé pour réaliser une nappe composite, dans lequel on relie l'une à l'autre deux nappes élémentaires (A) selon des lignes de liaison longitudinales (14) en les maintenant, là où s'effectue le processus de liaison, écartées l'une de l'autre par action mécanique entre les lignes de liaison en cours de formation, caractérisé en ce qu'à mesure qu'on relie les deux nappes on guide entre elles un constituant intercalaire (B, C) pour l'introduire dans les espaces longitudinaux définis entre les lignes de liaison longitudinales par ladite action mécanique.

2. Procédé selon la revendication 1, dans lequel on amène les nappes élémentaires (A) de part et d'autre d'une table à lamelles longitudinales (2), et l'on relie les nappes élémentaires (A) de façon que les lignes de liaison longitudinales(14) s'étendent entre les lamelles (22), caractérisé en ce qu'on introduit le constituant intercalaire dans des conduits longitudinaux (26) ménagés dans les lamelles de façon que le constituant intercalaire, lorsqu'il sort des lamelles (22), se place entre les nappes élémentaires (A) et entre les lignes de liaison (14).

3. Procédé selon la revendication 2, caractérisé en ce qu'on injecte dans les conduits (26) des lamelles (22), au moins un fluide ou une poudre qui fait prise avec l'une au moins des nappes élémentaires (A) à la sortie des conduits (26).

4. Procédé selon la revendication 3, caractérisé en ce qu'on choisit le fluide (B) parmi : les résines thermodurcissables, les résines thermoformables, les platres, les ciments, les élastomères, les mousses.

5. Procédé selon la revendication 1 ou 2, caractérisé en ce qu'on introduit comme constituant intercalaire un élément solide (C).

6. Procédé selon la revendication 1 ou 2, caractérisé en ce qu'on choisit le constituant intercalaire (C) parmi les câbles, les conducteurs électriques, les tubes, les ensembles de filaments, les fils.

7. Procédé selon l'une des revendications 1 à 6, caractérisé en ce que, pour relier les deux nappes élémentaires (A), on utilise une technique choisie parmi l'aiguilletage, la couture, la soudure.

8. Procédé selon la revendication 1 ou 2, caractérisé en ce qu'on part de deux nappes élémentaires (A) composées de fibres différentes.

9. Procédé selon la revendication 1, 2 ou 8, caractérisé en ce qu'on utilise comme constituant intercalaire entre les deux nappes (A) une résine thermoformable.

10. Procédé selon la revendication 1 ou 2, caractérisé en ce qu'une des deux nappes élémentaires (A) a un fini de surface du côté opposé à l'autre nappe élémentaire et on relie les deux nappes élémentaires par action à travers ladite autre nappe élémentaire.

11. Procédé selon la revendication 1 ou 2, caractérisé en ce qu'on utilise comme constituant intercalaire (C) des fibres absorbantes.

12. Dispositif pour fabriquer une nappe composite, en particulier selon un procédé conforme à l'une des revendications 1 à 11, comprenant des moyens (2) (4) pour guider deux nappes élémentaires parallèlement l'une à l'autre, avec des moyens mécaniques (22) pour définir un écartement entre elles, et des moyens (10) (12) (18) pour relier les deux nappes selon des lignes de liaison longitudinales (14) au voisinage desdits moyens mécaniques, caractérisé en ce qu'il comprend en outre des moyens (19) (26) pour guider un constituant intercalaire entre les deux nappes à mesure de leur avance parallèlement l'une à l'autre pour introduire ce constituant dans les espaces longitudinaux définis par les moyens mécaniques entre les lignes de liaison longitudinales (14).

13. Dispositif selon la revendication 12, caractérisé en ce que les moyens pour relier les deux nappes élémentaires (A) sont des moyens d'aiguilletage (18).

14. Dispositif selon la revendication 12, caractérisé en ce que les moyens pour relier les deux nappes élémentaires (A) sont des moyens de couture.

15. Dispositif selon à la revendication 12, caractérisé en ce que les moyens pour relier les deux nappes élémentaires (A) sont des moyens de soudure laser ou ultrasons.

16. Dispositif selon l'une des revendications 12 à 15, caractérisé en ce que les moyens pour introduire un constituant intercalaire (B) (C) comprennent des conduits (26) ouverts à leur extrémité aval et s'étendant entre les lignes de liaison (14).

17. Dispositif selon la revendication 16, caractérisé en ce que les conduits (26) sont ménagés à l'intérieur des moyens mécaniques (22) pour définir un écartement.

## Claims

1. A method for producing a composite lap, in which two basic laps (A) are joined to each other along longitudinal join lines (14) while keeping them, where the joining process occurs, separate from each other by mechanical action between the join lines which are being created, characterised in that as both laps are being joined an interleaved constituent (B, C) is guided between the laps thereby to be introduced into the longitudinal spaces produced between the longitudinal join lines by said mechanical action.

2. A method according to claim 1, in which the basic laps (A) are fed on either side of a longitudinally ribbed table (2) and the basic laps (A) are joined together in such a way that the longitudinal join lines (14) extend between the ribs (22), characterised in that the interleaved constituent is introduced into longitudinal ducts (26) located within the ribs in such a way that the interleaved constituent is located between the basic laps (A) and between the join lines (14) when it leaves the ribs (22).

3. A method according to claim 2, characterised by injecting into the ducts (26) in the ribs (22) at least one fluid or one powder which bonds to at least one of the basic laps (A) on leaving the ducts (26).

4. A method according to claim 3, characterised in that the fluid (B) is selected from thermosetting resins, thermoformable resins, plasters, cements, elastomers or foams.

5. A method according to claim 1 or 2, characterised in that a solid member (C) is introduced as the interleaved constituent.

6. A method according to claim 1 or 2, characterised in that the interleaved constituent (C) is selected from cables, electrical conductors, tubes, sets of filaments or threads.

7. A method according to one of claims 1 to 6, characterised in chat a technique selected from needling, stitching or welding is used to join together the two basic laps (A).

8. A method according to claim 1 or 2, characterised in that two basic laps (A) consisting of different fibres are used as starting materials.

9. A method according to claim 1, 2 or 8, characterised in that a thermoformable resin is used as the interleaved constituent between the two laps (A).

10. A method according to claim 1 or 2, characterised in that one of the two basic laps (A) has a surface finish on the side facing away from the other basic lap and that the two basic laps are joined together by action through the said other basic lap.

11. A method according to claim 1 or 2, characterised in that absorbent fibres are used as the interleaved constituent (C).

12. A device to manufacture a composite lap, in particular in accordance with a method according to any of claims 1 to 11, comprising means (2) (4) to guide two basic laps parallel to each other with mechanical means (22) to determine a space in between them, and means (10) (12) (18) to join the two laps together along longitudinal join lines (14) in the vicinity of said mechanical means, characterised in that it also comprises means (19) (26) to guide an interleaved constituent between the two laps while said laps are advanced parallel to each other, to introduce said constituent into the longitudinal spaces defined by the mechanical means between the longitudinal join lines (14).

13. A device according to claim 12, characterised in that the means for joining the two basic laps (A) together are needling means (18).

14. A device according to claim 12, characterised in that the means for joining the two basic laps (A) are stitching means.

15. A device according to claim 12, characterised in that the means for joining the two basic laps (A) are laser or ultrasonic welding means.

16. A device according to any of claims 12 to 15, characterised in that the means for introducing an interleaved constituent (B) (C) comprise ducts (26) which are open at their downstream ends and which extend between the join lines (14).

17. A device according to claim 16, characterised in that the ducts (26) are located within the mechanical means (22) to determine a spacing.

## Patentansprüche

1. Verfahren zur Herstellung einer zusammengesetzten Schicht, bei dem zwei Ausgangslagen (A) entlang longitudinaler Verbindungslinien (14) miteinander verbunden werden, wobei sie dort, wo die Verbindung ausgeführt wird, durch eine mechanische Aktion zwischen den Verbindungslinien während ihrer Ausbildung voneinander beabstandet gehalten werden, **dadurch gekennzeichnet**, **daß** in dem Maß wie die beiden Lagen miteinander verbunden werden, ein Zwischenbestandteil (B, C) zwischen den Lagen geführt wird, um es in die zwischen den longitudinalen Verbindungslinien durch die genannte mechanische Aktion definierten longitudinalen Zwischenräume einzuführen.

2. Verfahren nach Anspruch 1, in dem man die Ausgangslagen (A) beiderseits einem longitudinalen Lamellentisch (2) zuführt und die Ausgangslagen (A) so miteinander verbindet, daß die longitudinalen Verbindungslinien (14) sich zwischen den Lamellen (22) erstrecken, dadurch gekennzeichnet, daß der Zwischenbestandteil in longitudinale, in die Lamellen eingebrachte Leitungen (26) eingeführt wird, so daß sich der Zwischenbestandteil zwischen den Ausgangslagen (A) und zwischen den Verbindungslinien (14) befindet, wenn er die Lamellen (22) verläßt.

3. Verfahren nach Anspruch 2, dadurch gekennzeichnet, daß in die Leitungen (26) der Lamellen (22) wenigstens ein Fluid oder ein Puder eingeführt wird, das sich mit wenigstens einer der Ausgangslagen (A) am Ausgang der Leitungen (26) verbindet.

4. Verfahren nach Anspruch 3, dadurch gekennzeichnet, daß das Fluid (B) ausgewählt wird aus wärmehärtbaren Kunststoffen, wärmeverformbaren Kunststoffen, Gipsen, Zementen, Elastomeren und Schäumen.

5. Verfahren nach Anspruch 1 oder 2, dadurch gekennzeichnet, daß als Zwischenbestandteil ein fester Stoff (C) eingeführt wird.

6. Verfahren nach Anspruch 1 oder 2, dadurch gekennzeichnet, daß der Zwischenbestandteil (C) ausgewählt wird aus Kabeln, elektrischen Leitungen, Schläuchen, Fadenanordnungen und Fasern.

7. Verfahren nach einem der Ansprüche 1 bis 6, dadurch gekennzeichnet, daß zur Verbindung der beiden Ausgangslagen (A) eine Technik verwendet wird, die aus den Techniken Nadelung, Nähen und Schweißen ausgewählt wird.

8. Verfahren nach Anspruch 1 oder 2, dadurch gekennzeichnet, daß von zwei Ausgangslagen (A) aus verschiedenen Fasern ausgegangen wird.

9. Verfahren nach Anspruch 1, 2 oder 8, dadurch gekennzeichnet, daß als Zwischenbestandteil zwischen den beiden Lagen (A) ein wärmeverformbarer Kunststoff benutzt wird.

10. Verfahren nach Anspruch 1 oder 2, dadurch gekennzeichnet, daß eine der Ausgangslagen (A) einen Oberflächenfertigstellung auf der der anderen Ausgangslage abgewandten Seite aufweist und daß die beiden Ausgangslagen durch eine durch die genannte andere Ausgangslage hindurchgehende Aktion miteinander verbunden werden.

11. Verfahren nach Anspruch 1 oder 2, dadurch gekennzeichnet, daß als Zwischenbestandteil (C) absorbierende Fasern verwendet werden.

12. Vorrichtung zur Herstellung einer zuammengesetzten Schicht, insbesondere nach einem Verfahren nach einem der Ansprüche 1 bis 11, mit Einrichtungen (2, 4) zum Führen zweier Ausgangslagen parallel zueinander mit mechanischen Mitteln (22) zur Bildung eines Abstandes zwischen ihnen und Mitteln (10, 12, 18) zur Verbindung der beiden Lagen entlang longitudinaler Verbindungslinien (14) neben den genannten mechanischen Mitteln, dadurch gekennzeichnet, daß sie ferner Mittel (19, 26) zum Führen eines Zwischenbestandteils zwischen den beiden Lagen bei deren Vorschub parallel zueinander und zum Einführen des Bestandteils in longitudinale Zwischenräume aufweist, die durch die mechanischen Mittel zwischen den longitudinalen Verbindungsmitteln (14) definiert sind.

13. Vorrichtung nach Anspruch 12, dadurch gekennzeichnet, daß die Mittel zur Verbindung der beiden Ausgangslagen (A) durch eine Nadeleinrichtung (18) gebildet ist.

14. Vorrichtung nach Anspruch 12, dadurch gekennzeichnet, daß die Mittel zur Verbindung der beiden Ausgangslagen (A) durch eine Näheinrichtung gebildet ist.

15. Vorrichtung nach Anspruch 12, dadurch gekennzeichnet, daß die Mittel zur Verbindung der beiden Ausgangslagen (A) durch eine Laser- oder Ultraschallverschweißeinrichtung gebildet ist.

16. Vorrichtung nach einem der Ansprüche 12 bis 15, dadurch gekennzeichnet, daß die Mittel zur Einführung eines Zwischenbestandteils (B, C) Leitungen (26) aufweist, die an ihren stromabwärts gelegenen Enden offen sind und sich zwischen den Verbindungslinien (14) erstrecken.

17. Vorrichtung nach Anspruch 16, dadurch gekennzeichnet, daß die Leitungen (26) im Innern von den mechanischen Mitteln (22) zur Bildung eines Abstandes ausgebildet sind.
